# EUROPEAN PATENT SPECIFICATION

(11) **EP 3 187 407 B1**
(45) Date of publication and mention of the grant of the patent: **12.12.2018**
(21) Application number: 14900531.6
(22) Date of filing: 27.08.2014
(51) Int. Cl.: B62M 6/55, B62M 11/06, F16D 43/16, F16D 47/04, F16H 61/02, F16H 3/10, F16H 3/089, F16D 43/14

(54) **ELECTRIC ASSISTED BICYCLE**
ELEKTRISCH UNTERSTÜTZTES FAHRRAD
BICYCLETTE À ASSISTANCE ÉLECTRIQUE

(43) Date of publication of application: 05.07.2017
(73) Proprietor: Panasonic Intellectual Property Management Co., Ltd., Osaka-shi, Osaka 540-6207 (JP)
(72) Inventor: KAWAKAMI, Masafumi, Osaka-shi, Osaka 540-6207 (JP)
(74) Representative: Grünecker Patent- und Rechtsanwälte PartG mbB
(86) International application number: PCT/JP2014/004387
(87) International publication number: WO 2016/030921

(56) References cited:
- JP-A- H08 175 464
- JP-B1- 5 523 636

## Description

### Technical Field

The present invention relates to an electric assisted bicycle capable of traveling with a combination of a human driving force generated by a pedal force from a pedal and an auxiliary driving force generated by a motor.

### Background Art

A known electric assisted bicycle includes a motor that receives power supplied from a power storage such as a battery, detects a human driving force including a pedal force applied to a pedal by means of a torque sensor, and adds an auxiliary driving force (assisting force) of the motor according to the human driving force. Thus, such an electric assisted bicycle can smoothly travel on an uphill and so on.
Japanese patent JP 5 523636 B1 discloses an electric assisted bicycle according to the preamble of claim 1. The electric assist bicycle according to the disclosure of JP 5 523636 B1 includes a speed reduction mechanism that has pairs of reduction gears and a selection clutch engageable with the reduction gears, combines the human driving force and the auxiliary driving force, and changes gears for the combined force of the human driving force and the auxiliary driving force.

In such an electric assisted bicycle, a drive unit containing a motor is disposed at the location of a crank shaft. Moreover, the electric assisted bicycle configured thus has a relatively heavy drive unit that is disposed at a low position at the center of the electric assisted bicycle (that is, an intermediate point between the front wheel and the rear wheel) in the longitudinal direction. Thus, the front and rear wheels of the electric assisted bicycle configured thus can be more easily lifted than an electric assisted bicycle having a motor in the hub of the front or rear wheel. Such an electric assisted bicycle can easily pass over a step of a path, achieving ease of handling and high riding stability.

A drive unit provided in such an electric assisted bicycle is a so-called single-shaft drive unit or a so-called double-shaft drive unit. A double-shaft drive unit includes an auxiliary-driving force output sprocket that outputs an auxiliary driving force from a motor in addition to a driving sprocket (also called a front sprocket or a chain sprocket) serving as a human driving force output wheel disposed near one end of a crank shaft. In other words, in an electric assisted bicycle including the double-shaft drive unit, a human driving force and an auxiliary driving force are combined outside the drive unit including a chain and then the force is transmitted as a resultant force to the rear wheel. In the single-shaft drive unit, a human driving force generated by a pedal force and an auxiliary driving force generated by a motor are combined and then the resultant force is outputted from a driving sprocket.

The double-shaft drive unit is disclosed in, for example, Patent Literature 1. In the double-shaft drive unit, an auxiliary-driving force output sprocket protrudes from the outside of the unit case of the drive unit. The driving sprocket that outputs a human driving force and the auxiliary-driving force output sprocket that outputs an auxiliary driving force are engaged with a chain serving as an endless driving force transmission member. The human driving force and the auxiliary driving force are combined by the chain and then are transmitted to the rear wheel.

Behind the auxiliary-driving force output sprocket, a tensioner device (also called a guide device) is provided in engagement with the chain, which has been engaged with the auxiliary-driving force output sprocket, so as to guide the chain downward. Moreover, a tension sprocket provided in the tensioner device increases the winding angle of the chain engaged with the auxiliary-driving force output sprocket.

The single-shaft drive unit is disclosed in, for example, Patent Literature 2. In the single-shaft drive unit, the outer periphery of a crank shaft that receives a human driving force transmitted from the pedal has a cylindrical human-power transmission member that receives the human driving force transmitted by serration coupling and so on, and a resultant force member where a human driving force transmitted via the human-power transmission member is combined with an auxiliary driving force from the motor. Subsequently, the human driving force from the human-power transmission member is transmitted to the resultant force member via a one-way clutch. Moreover, a large-diameter gear that receives an auxiliary driving force from the motor via a speed reduction mechanism is formed on one end of the resultant force member, whereas the driving sprocket is attached to the other end of the resultant force member, the driving sprocket serving as a driving force output wheel engaged with a chain serving as an endless driving force transmission member. A resultant force from the resultant force member is transmitted from the driving sprocket to the rear wheel through the chain.

The single-shaft drive unit is configured such that only the driving sprocket is engaged with the chain and the resultant force of a human driving force and an auxiliary driving force is transmitted to the chain. In contrast, the double-shaft drive unit needs to engage the driving sprocket for transmitting a human driving force, the auxiliary-driving force output sprocket for transmitting an auxiliary driving force, and the tension sprocket with the chain.

Thus, the area of the single-shaft drive unit in side view (laterally projected area) can be advantageously smaller (compact) than that of the double-shaft drive unit by devising the layout of the motor and the speed reduction mechanism. Moreover, a so-called front derailleur can be attached to the single-shaft drive unit including the driving sprocket with multiple stages. In the double-shaft drive unit, it is necessary to engage the driving sprocket, the auxiliary-driving force output sprocket, and the tension sprocket with the chain, leading to difficulty in attaching the front derailleur. Furthermore, the single-shaft drive unit advantageously eliminates the need for providing the tensioner device of a tension sprocket or the like.

If a front derailleur is attached to a so-called single-shaft drive unit in which a human driving force and an auxiliary driving force are combined, an external derailleur for a sport bicycle or the like may be provided on the side of the crank shaft. Specifically, a plurality of driving sprockets may be disposed in a location for the driving sprockets so as to be displaced from each other along the axial direction of the crank shaft (also referred to as a vehicle width direction), and a front derailleur that moves the chain in the vehicle width direction may be provided near the driving sprockets.

### Citation List

### Patent Literatures

Patent Literature 1: Japanese Patent Laid-Open No. 2009-208710
Patent Literature 2: Japanese Patent Laid-Open No. 10-250673

### Summary of Invention

### Technical Problems

However, the single-shaft drive unit including the external derailleur may cause the following problems:
First, since the driving sprockets are laterally disposed and the chain is switched among the driving sprockets, the chain needs to have smaller dimensions (smaller thickness) in the vehicle width direction than an ordinary chain. However, in such an electric assisted bicycle, the resultant force of a human driving force and an auxiliary driving force is applied to the chain. Thus, the chain having smaller dimensions (smaller thickness) in the vehicle width direction than an ordinary chain may have quite a short life expectancy causing frequent replacement of components or lead to an insufficient auxiliary driving force.

Generally, a front derailleur provided for a bicycle is disposed diagonally above and behind a driving sprocket. A battery mount and a battery are disposed in this location on an electric assisted bicycle and thus these components (the mount and the battery) may interfere with the front derailleur, disadvantageously leading to difficulty in disposing these components in a satisfactory manner.

Since the front derailleur is exposed to the outside, the front derailleur or an engaging portion between the chain and the front derailleur may come into contact with obstacles during traveling. This may cause damage or take off the chain, reducing reliability.

The external derailleur includes a dedicated chain for transmitting a driving force to the rear wheel and the front derailleur for switching gears. Thus, it is difficult to replace the chain with a toothed belt.

To address these problems, a drive unit may contain a transmission mechanism that includes pairs of reduction gears and a selection clutch engageable with the reduction gears so as to change multiple gears. For example, a transmission lever mounted on a handle bar may be manually operated to move the selection clutch via a wire connected to the transmission lever, allowing a gear change of the transmission mechanism.

With this configuration, a so-called internal derailleur is provided in a single-shaft drive unit. This eliminates the need for a chain having small dimensions (small thickness) in the vehicle width direction if an external derailleur is provided in the single-shaft drive unit. Thus, the chain does not have an extremely short life expectancy causing frequent replacement of components or lead to an insufficient auxiliary driving force. This configuration also eliminates the need for a front derailleur and does not cause any problems about the location of a front derailleur. Moreover, the human-power transmission member, the resultant-force transmission member, and the speed reduction mechanism are disposed in the drive unit so as to be protected from the outside, thereby improving reliability.

However, the single-shaft drive unit including the so-called internal derailleur can obtain various advantages but requires a manual gear change, resulting in inconvenience.

The present invention has been devised to solve the problems. An object of the present invention is to provide an electric assisted bicycle that can automatically change gears with an internal derailleur provided in a drive unit that internally combines a human driving force and an auxiliary driving force.

### Solution to Problems

In order to solve the problems, the present invention is an electric assisted bicycle including a drive unit with a motor, the electric assist bicycle being capable of traveling with a combination of a human driving force generated by a pedal force from a pedal and an auxiliary driving force generated by the motor, wherein the drive unit is disposed at an intermediate position between a front wheel and a rear wheel, the drive unit contains a transmission mechanism that transmits a resultant force of a human driving force and an auxiliary driving force from the motor while changing multiple gears, the transmission mechanism includes at least one transmission weight whose orientation is changed according to a centrifugal force during a rotation of the transmission weight, and an increase in the rotation speed of the crank shaft interlockingly raises the rotation speed of the transmission weight and changes the orientation of the transmission weight so as to change from a low gear to a high gear.

According to the present invention, the transmission weight is rotated by a resultant force.

The present invention further includes a human-power transmission member and a resultant-force transmission member on the outer periphery of the crank shaft, the human-power transmission member receiving the transmitted human driving force, the resultant-force transmission member receiving a transmitted resultant force.

Moreover, according to the present invention, the human-power transmission member, the resultant-force transmission member, and the transmission mechanism are disposed in the motor drive unit, the electric assisted bicycle includes a driving force output wheel coaxial with the crank shaft and an endless driving force transmission member looped over the human driving force output wheel, and a resultant force transmitted to the resultant-force transmission member through the transmission mechanism is transmitted to a rear wheel through the driving force output wheel and the endless driving force transmission member.

The present invention further includes a human-power transmission member that receives a transmitted human driving force, a resultant-force transmission member where an output wheel is assembled to output a resultant force from the drive unit, a low-speed reduction gear that transmits the resultant force to the resultant-force transmission member during a low-speed rotation, and a high-speed reduction gear that transmits the resultant force to the resultant-force transmission member during a high-speed rotation.

The present invention further includes a high-speed one-way clutch disposed between the high-speed reduction gear and the resultant-force transmission member so as to transmit a rotary force of the high-speed reduction gear to the resultant-force transmission member, wherein the high-speed one-way clutch is switched to a disengaged state and an engaged state according to a change of the orientation, the orientation being changed by a centrifugal force of the transmission weight.

According to the present invention, the transmission weight is disposed so as to pivot about a shaft rotating coaxially with the crank shaft.

According to the present invention, the transmission weight is disposed so as to pivot about a connecting pin connected to the resultant-force transmission member that receives a transmitted resultant force.

According to the present invention, the transmission weight is provided on the high-speed one-way clutch.

According to the present invention, the transmission weight radially movable relative to the axis of the crank shaft is disposed so as to rotate coaxially with the crank shaft.

According to the present invention, the transmission weight is disposed on a high-speed rotation part attached to the high-speed reduction gear.

According to the present invention, the transmission weight is disposed on the high-speed rotation part attached to the high-speed reduction gear, the high-speed rotation part has a moving member whose position is switched based on a centrifugal force of the transmission weight, and the moving member switches the high-speed one-way clutch to a disengaged state and an engaged state.

According to the present invention, the human-power transmission member has a magnetostriction generation portion of a torque sensor for detecting the human driving force. Moreover, one of the human-power transmission member and a component interlocking with the human-power transmission member preferably includes a rotation detector that detects a rotation of the human-power transmission member. Furthermore, the endless driving force transmission member may be a toothed belt.

### Advantageous Effects of Invention

According to the present invention, the drive unit disposed at an intermediate position between the front wheel and the rear wheel contains the transmission mechanism that transmits the resultant force of a human driving force and an auxiliary driving force from the motor while changing multiple gears. The transmission mechanism includes the transmission weight whose orientation is changed according to a centrifugal force during a rotation of the transmission weight, and an increase in the rotation speed of the crank shaft interlockingly raises the rotation speed of the transmission weight and changes the orientation of the transmission weight so as to change from a low gear to a high gear. With this configuration, the pedals rotating at a high speed increase the rotation speed of the crank shaft, thereby interlockingly changing the orientation of a component including the transmission weight so as to change from the low gear to the high gear. Thus, the single-shaft drive unit can have the function of an internal derailleur and gears can be automatically changed.

The crank shaft rotating at a low speed is always shifted to a low gear, for example, at the beginning of traveling. This eliminates the need for components resistant to a high torque during high-speed rotations, for example, resultant-force transmission components such as the resultant-force transmission member, the driving force output wheel, and the endless driving force transmission member that transmit a resultant force to the rear wheel, and the motor (the motor can output a high torque during high-speed rotations). Thus, relatively low manufacturing cost can be achieved without reducing reliability unlike components resistant to a high torque during high-speed rotations.

Moreover, the transmission weight is rotated by a resultant force and thus can be satisfactorily rotated by a larger force than in a rotation only by a human driving force or an auxiliary driving force. This can change gears with relatively high stability, leading to high reliability.

Furthermore, the transmission weight is provided on the high-speed one-way clutch and thus gears can be automatically changed with quite a simple configuration. Thus, the manufacturing cost can be reduced.

Moreover, the transmission weight radially movable relative to the axis of the crank shaft is disposed so as to rotate coaxially with the crank shaft. This configuration can also achieve relatively low manufacturing cost.

The transmission weight is disposed on a high-speed rotation part attached to the high-speed reduction gear. This rotates the transmission weight at a high speed and thus a relatively large centrifugal force is applied to the transmission weight, achieving a relatively stable gear change with high reliability. This allows the transmission weight to have a relatively small size, thereby reducing the size of the so-called single-shaft drive unit including the internal derailleur.

### Brief Description of the Drawings

[FIG. 1] FIG. 1 is an overall side view of an electric assisted bicycle according to embodiments of the present invention.
[FIG. 2] FIG. 2 is a partial cut side view of the electric assisted bicycle.
[FIG. 3] FIG. 3 is a right side view of a drive unit for the electric assisted bicycle.
[FIG. 4] FIG. 4 is a sectional plan view showing a drive unit for an electric assisted bicycle at a low gear (first speed) according to a first embodiment of the present invention.
[FIG. 5] FIG. 5 is a sectional plan view showing the principal part of the drive unit at the low gear (first speed).
[FIG. 6] FIG. 6 is a sectional side arrow view of the drive unit taken along line A-A of FIG. 5 at the low gear (first speed).
[FIG. 7] FIG. 7 is a sectional side arrow view of the drive unit taken along line B-B of FIG. 5 at the low gear (first speed).
[FIG. 8] FIG. 8 is a sectional side arrow view of the drive unit taken along line C-C of FIG. 5 at the low gear (first speed).
[FIG. 9] FIG. 9 is a sectional plan view showing the principal part of the drive unit at a high gear (second speed).
[FIG. 10] FIG. 10 is a sectional side arrow view of the drive unit taken along line D-D of FIG. 9 at the high gear (second speed).
[FIG. 11] FIG. 11 is a sectional side arrow view of the drive unit taken along line E-E of FIG. 9 at the high gear (second speed).
[FIG. 12] FIG. 12 is a sectional side arrow view of the drive unit taken along line F-F of FIG. 9 at the high gear (second speed).
[FIG. 13] FIG. 13 is a sectional plan view showing the principal part of a drive unit for an electric assisted bicycle at a low gear (first speed) according to a second embodiment of the present invention.
[FIG. 14] FIG. 14 is a perspective view of a high-speed one-way clutch (transmission weights) for the drive unit.
[FIG. 15] FIG. 15 is a sectional side arrow view of the drive unit taken along line G-G of FIG. 13 at the low gear (first speed).
[FIG. 16] FIG. 16 is a sectional plan view showing the principal part of the drive unit at a high gear (second speed).
[FIG. 17] FIG. 17 is a sectional side arrow view of the drive unit taken along line H-H of FIG. 16 at the high gear (second speed).
[FIG. 18] FIG. 18 is a sectional plan view showing the principal part of a drive unit for an electric assisted bicycle at a low gear (first speed) according to a third embodiment of the present invention.
[FIG. 19] FIG. 19 is a sectional side arrow view of the drive unit taken along line I-I of FIG. 18 at the low gear (first speed).
[FIG. 20] FIG. 20 is a sectional plan view showing the principal part of the drive unit at a high gear (second speed).
[FIG. 21] FIG. 21 is a sectional side arrow view of the drive unit taken along line J-J of FIG. 20 at the high gear (second speed).
[FIG. 22] FIG. 22 is a sectional plan view showing the principal part of a drive unit for an electric assisted bicycle at a low gear (first speed) according to a fourth embodiment of the present invention.
[FIG. 23] FIG. 23 is a perspective view of a weight holding part for the drive unit.
[FIG. 24] FIG. 24 is a sectional plan view showing the principal part of the drive unit at a high gear (second speed).

### Description of Embodiments

An electric assisted bicycle according to embodiments of the present invention will be described below with reference to the accompanying drawings. In the following explanation, a lateral direction and a longitudinal direction are set relative to the traveling direction of a rider on an electric assisted bicycle 1. The present invention is not limited to the following configuration.

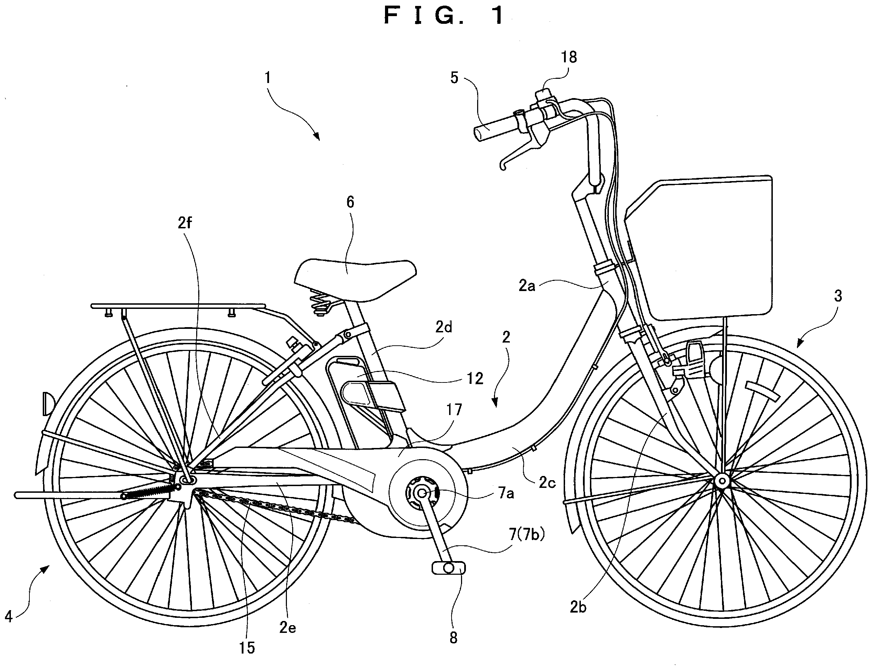

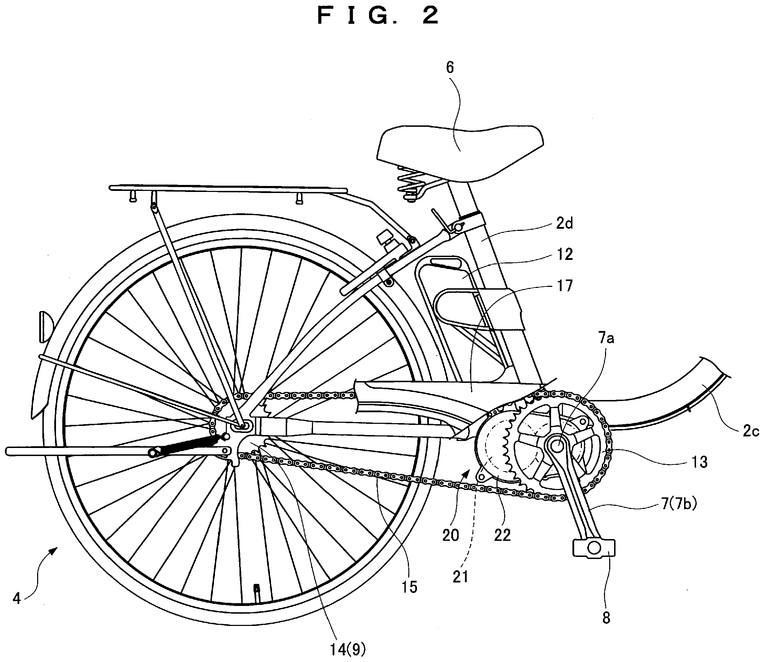

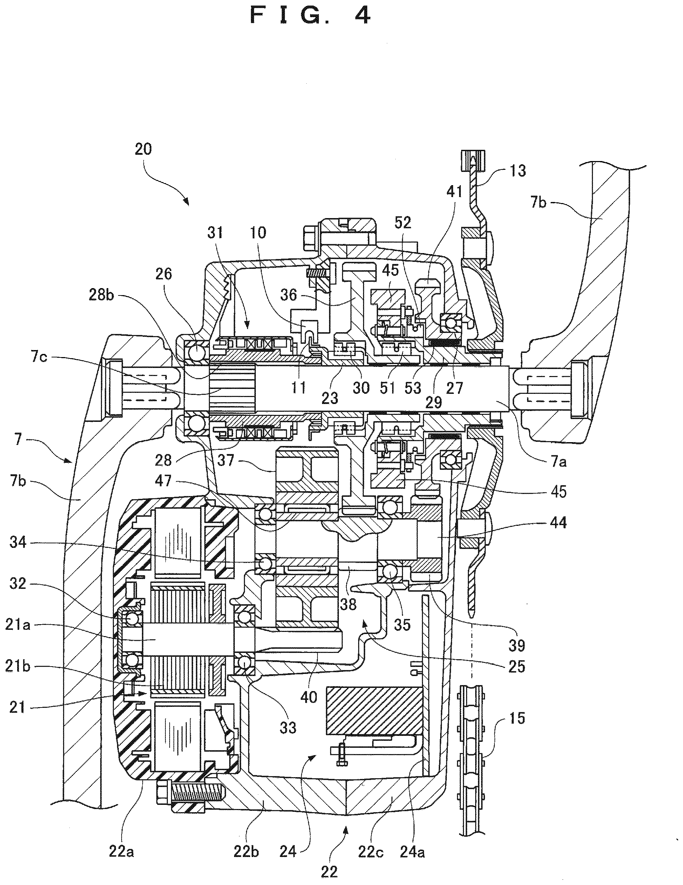

In FIGS. 1 and 2, reference numeral 1 denotes the electric assisted bicycle according to the first embodiment of the present invention. As shown in FIGS. 1 and 2, the electric assisted bicycle 1 has: a metallic frame 2 including a head tube 2a, a front fork 2b, a main tube 2c, a seat tube 2d, a chain stay 2e, and a seat stay 2f; a front wheel 3 rotatably attached to the lower end of the front fork 2b; a rear wheel 4 rotatably attached to the rear end of the chain stay 2e; a handle bar 5 that changes the direction of the front wheel 3; a saddle 6; a crank 7 and pedals 8 that receive a human driving force including a pedal force; a drive unit 20 including an electric motor 21 (for example, see FIG. 4 and the like) serving as a driving source for generating an auxiliary driving force (assisting force) and a control unit 24 (see FIG. 4) for various kinds of electrical control including the motor 21 and so on; a battery 12 configured by a secondary battery for supplying driving power to the motor 21; a manual operation part 18 for switching the power supply of the electric assisted bicycle 1 and setting a riding mode, the manual operation part 18 being attached to, for example, the handle bar so as to be operated by a rider and so on; a driving sprocket (may be called a front sprocket, a crank sprocket, or a front gear) 13 that is attached so as to coaxially rotate integrally with a crank shaft 7a and serves as a driving force output wheel for outputting the resultant force of a human driving force and an auxiliary driving force; a rear sprocket (may be called a rear gear) 14 serving as a rear wheel attached to a hub (also called a rear hub) 9 of the rear wheel 4; a chain 15 serving as an endless driving force transmission member rotatably and seamlessly wound around the driving sprocket 13 and the rear sprocket 14; and a chain cover 17 that laterally covers the chain 15 and so on.

The battery 12 is an example of a power storage and preferably serves as a secondary battery. Another example of a power storage may be a capacitor. The crank 7 includes crank arms 7b provided on the right and left of the crank 7 and the crank shaft 7a connecting the right and left crank arms 7b. The pedal 8 is rotatably attached to the end of the crank arm 7b.

As shown in FIGS. 1 and 2, also in the electric assisted bicycle 1, the drive unit 20 is disposed at an intermediate position between the front wheel 3 and the rear wheel 4, for example, substantially behind the crank shaft 7a (specifically, under the intermediate position). This configuration locates the relatively heavy drive unit 20 at the center of the electric assisted bicycle 1 in the longitudinal direction. Thus, the front wheel 3 and the rear wheel 4 are easily lifted and the electric assisted bicycle 1 can easily pass over a step of a path, achieving ease of handling of the body (e.g., the frame 2) of the electric assist bicycle 1 and high riding stability.

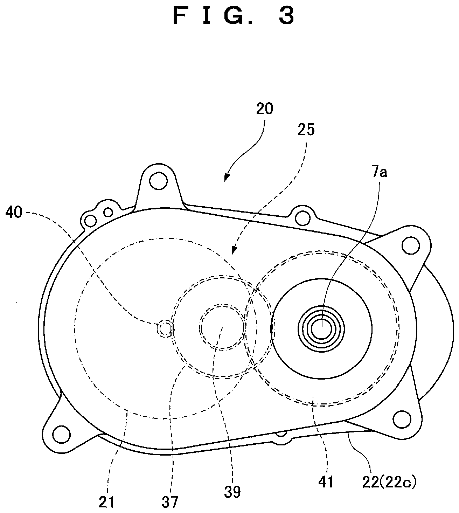

FIG. 3 is a right side view of the drive unit 20. FIG. 4 is a sectional plan view of the drive unit 20.

As shown in FIGS. 3 and 4, the drive unit 20 includes a unit case 22 constituting a casing and so on. The unit case 22 includes a motor case 22a, a left-side case 22b, and a right-side case 22c. The crank shaft 7a laterally penetrates the front of the drive unit 20. Moreover, the outer periphery of the crank shaft 7a has: a substantially cylindrical human-power transmission member 28 that receives a human driving force transmitted from the crank shaft 7a; an interlocking cylindrical part 23 that receives a human driving force transmitted from the human-power transmission member 28; and a resultant-force transmission member 29 that receives a human driving force transmitted from the interlocking cylindrical part 23 via, for example, a one-way clutch (a one-way clutch for interrupting an auxiliary driving force) 30 and transmits the resultant force of the human driving force and an auxiliary driving force from the motor 21 to the driving sprocket 13.

Furthermore, a transmission mechanism (speed reduction mechanism) 25 having pairs of reduction gears 36 to 41 is longitudinally disposed from the right side of the front of the unit case 22 to the center of the unit case 22. In the present embodiment, as will be discussed later, the transmission mechanism 25 also provides the function of an internal derailleur (internal gear change unit). Moreover, the motor 21 is disposed on the left side of the rear of the unit case 22 while the control unit 24 is disposed on the right side of the rear of the unit case 22, the control unit 24 including a control circuit board 24a having electronic components for various kinds of electrical control and a storage containing various kinds of information.

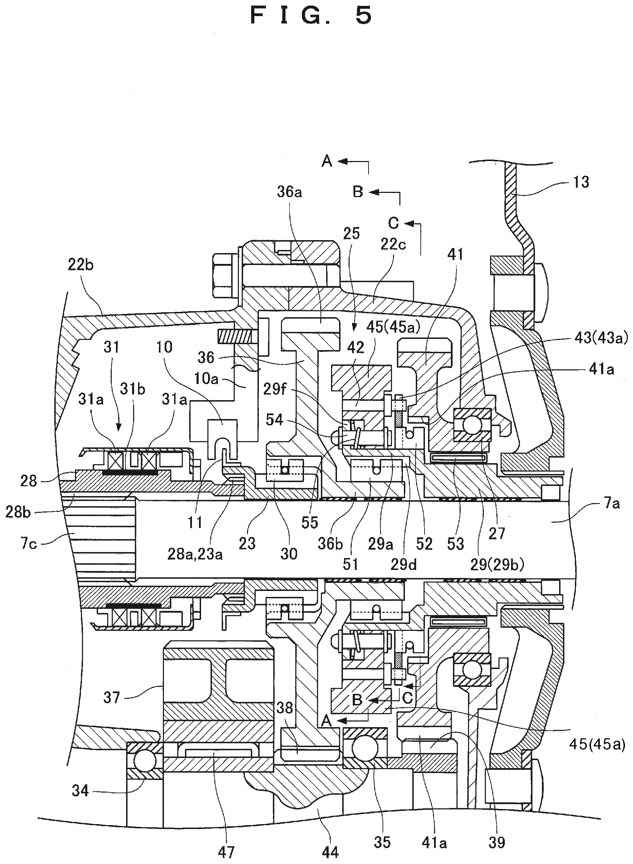

The drive unit 20 will be more specifically discussed below. As shown in, for example, FIGS. 4 and 5, the crank shaft 7a laterally penetrating the front of the drive unit 20 is disposed so as to be rotatable by bearings 26 and 27. The cylindrical human-power transmission member 28 is fit onto the outer periphery of the left side of the crank shaft 7a via a serration part (or a spline part) 7c so as to rotate as an integral part. Moreover, a serration part (or a spline part) 28b is formed at a point corresponding to the serration part (or a spline part) 7c of the crank shaft 7a inside the human-power transmission member 28, and the serration part 28b is engaged with the serration part (or a spline part) 7c of the crank shaft 7a.

A magnetostriction generation portion 31b having magnetic anisotropy is formed on the outer surface of the human-power transmission member 28. Coils 31a are disposed with a certain clearance (space) on the outer periphery of the human-power transmission member 28. The magnetostriction generation portion 31b and the coils 31a constitute a magnetostriction torque sensor (human power detection part) 31. With this configuration, a human driving force from the crank shaft 7a is transmitted to the human-power transmission member 28 and is detected by the torque sensor 31. In the magnetostriction torque sensor 31, the magnetostriction generation portion 31b is spirally formed with an angle of, for example, +45° to - 45° with respect to the axial direction of the human-power transmission member 28. When a human driving force is transmitted to the human-power transmission member 28, the magnetostriction generation portion 31b on the surface of the human-power transmission member 28 is distorted so as to generate an increased and a decreased part in magnetic permeability. Thus, a difference in the inductance of the coils 31a is measured so as to detect the magnitude of a torque (human driving force).

The interlocking cylindrical part 23 is disposed next to the right side of the human-power transmission member 28 on the outer periphery of the crank shaft 7a so as to rotate relative to the crank shaft 7a. The interlocking cylindrical part 23 rotates integrally with the human-power transmission member 28 while fitting a serration part (or a spline part) 28a formed on the outer periphery of the right end of the human-power transmission member 28 and a serration part (or a spline part) 23a formed on the inner periphery of the left end of the interlocking cylindrical part 23. In the present embodiment, the serration part (or a spline part) 23a formed on the inner periphery of the left end of the interlocking cylindrical part 23 is externally fit onto the serration part (or a spline part) 28a of the human-power transmission member 28.

Furthermore, in the present embodiment, a rotation detecting member 11 for detecting a rotational state of the interlocking cylindrical part 23 is attached to the outer periphery of the left side of the interlocking cylindrical part 23. Moreover, a rotation detector 10 is fixed to the unit case 22 via an attachment member 10a so as to laterally hold the rotation detecting member 11 with a small clearance. For example, the rotation detector 10 includes two pairs of optical sensors disposed along the rotation direction of the rotation detecting member 11, the optical sensor including a light emitting part and a light receiving part. The rotation detecting member 11 has a large number of teeth (light-shielding portions) extending outward like comb teeth. The teeth of the rotation detecting member 11 pass between the light emitting part and the light receiving part of the rotation detector 10, allowing the rotation detector 10 to electrically detect a light incidence state and a light shielding state. Subsequently, the amount and direction of rotation of the interlocking cylindrical part 23 are detected in the control unit 24 that receives the signal of the rotation detector 10. The optical sensor may be replaced with a magnetometric sensor to detect the amount and direction of rotation of the interlocking cylindrical part 23. In this case, the interlocking cylindrical part 23 rotates integrally with the human-power transmission member 28 while the human-power transmission member 28 rotates integrally with the crank shaft 7a. Thus, the detection of the amount and direction of rotation of the interlocking cylindrical part 23 allows the detection of the amounts and directions of rotations of the crank shaft 7a and the pedal 8.

The low-speed reduction gear (one of the reduction gears) 36 provided in the transmission mechanism 25 is disposed on the outer periphery of the right side of the interlocking cylindrical part 23 via the one-way clutch (one-way clutch for interrupting an auxiliary driving force) 30. During pedaling forward with the pedals 8, a human driving force transmitted to the interlocking cylindrical part 23 is transmitted to the low-speed reduction gear 36 of the transmission mechanism 25.

As shown in FIG. 4, the motor 21 includes a rotating shaft 21a and a rotor portion 21b that are rotatably supported by motor bearings 32 and 33. The rotating shaft 21a of the motor 21 protrudes to the right so as to form a motor-shaft reduction gear 40, which will be discussed later, on the outer periphery of the protruding portion.

As shown in FIGS. 4 and 5, the transmission mechanism (speed reduction mechanism) 25 has: an intermediate shaft 44 disposed in parallel with the crank shaft 7a; the pairs of (three pairs in the present embodiment) reduction gears 36 to 41 that include the low-speed reduction gear 36 and the high-speed reduction gear 41, which will be discussed later; a low-speed one-way clutch 51; a high-speed one-way clutch 52; transmission weights 45 respectively connected to the resultant-force transmission member 29 via a connecting pin 54; and a transmission engaging member 43 that interlocks with the transmission weight 45 and is removably engaged with the high-speed one-way clutch 52. Moreover, the transmission mechanism 25 combines a human driving force transmitted through the crank shaft 7a and an auxiliary driving force transmitted from the motor 21 and then transmits the resultant force of the human driving force and the auxiliary driving force to the resultant-force transmission member 29 with multiple variable gears (two gears: a low gear and a high gear in the present embodiment).

The intermediate shaft 44 is laterally extended at the center of the drive unit 20 in the longitudinal direction and is rotatably supported in parallel with the crank shaft 7a by the bearings 34 and 35. The intermediate shaft 44 has a one-way clutch 47 for interrupting a human driving force, the large-diameter first intermediate-shaft reduction gear 37, the small-diameter second intermediate-shaft reduction gear 38, and the small-diameter third intermediate reduction gear 39 that is larger in diameter than the second intermediate-shaft reduction gear 38 and the like. The first to third intermediate-shaft reduction gears 37 to 39 rotate integrally with the intermediate shaft 44 if the one-way clutch 47 for interrupting a human driving force is not disengaged.

The motor-shaft reduction gear 40 formed on the rotating shaft 21a of the motor 21 has a small diameter and is engaged with the large-diameter first intermediate-shaft reduction gear 37. Thus, the rotation of the motor 21 is reduced and the torque of an auxiliary driving force from the motor 21 is increased and is transmitted to the intermediate shaft 44. The small-diameter second intermediate-shaft reduction gear 38 is engaged with the large-diameter low-speed reduction gear 36 rotatably disposed on the outer periphery of the crank shaft 7a. With this configuration, the torque of an auxiliary driving force transmitted to the intermediate shaft 44 is further increased and is transmitted to the low-speed reduction gear 36. The small-diameter third intermediate-shaft reduction gear 39 is engaged with the large-diameter high-speed reduction gear 41 (having a smaller diameter than the low-speed reduction gear 36) rotatably disposed on the outer periphery of the crank shaft 7a. With this configuration, the torque of an auxiliary driving force transmitted to the intermediate shaft 44 is further increased and is transmitted to the high-speed reduction gear 41. The high-speed reduction gear 41 is rotated faster than the low-speed reduction gear 36. The one-way clutch 47 for interrupting a human driving force is disposed between the intermediate shaft 44 and the first intermediate-shaft reduction gear 37. The one-way clutch 47 operates so as not to transmit a human driving force from the low-speed reduction gear 36 to the motor 21. In the absence of an auxiliary driving force, the one-way clutch 47 prevents a force from the pedal 8 from rotating the motor 21, reducing a force applied by a rider to rotate the pedal 8.

For example, as shown in FIG. 5 and the like, the low-speed reduction gear 36 has a small-diameter cylindrical part 36b that extends to the right from the proximal portions of teeth 36a and is rotatably disposed on the outer periphery of the crank shaft 7a. The low-speed one-way clutch 51 is assembled to the outer periphery of the cylindrical part 36b of the low-speed reduction gear 36 and includes cams (ratchet claws) that are removably engaged with teeth 29d (for example, see FIGS. 5 to 7 and the like) formed on the inner periphery of a medium-diameter cylindrical part 29a formed on the resultant-force transmission member 29. The resultant-force transmission member 29 is rotatably disposed on the outer periphery of the crank shaft 7a and includes the medium-diameter cylindrical part 29a disposed on the left side and a small-diameter cylindrical part 29b disposed on the right side. Moreover, the driving sprocket 13 is attached to the outer periphery of the end of the small-diameter cylindrical part 29b of the resultant-force transmission member 29 and is rotated integrally with the resultant-force transmission member 29.

For example, as shown in FIGS. 5 to 7 and the like, the high-speed reduction gear 41 is rotatably disposed on the outer periphery of the left side of the small-diameter cylindrical part 29b of the resultant-force transmission member 29 via the bearing 53. Teeth 41a are formed on the inner periphery of the left side of the high-speed reduction gear 41 so as to be removably engaged with the high-speed one-way clutch 52. Moreover, the high-speed one-way clutch 52 is attached to the outer periphery of the right side of the medium-diameter cylindrical part 29a of the resultant-force transmission member 29. The high-speed one-way clutch 52 includes cams (ratchet claws) 52a that are urged by an annular coil spring so as to protrude (rise) to the outer periphery of the high-speed one-way clutch 52. The cams 52a rotating in a predetermined direction are integrally rotated in engagement with the teeth 41a of the high-speed reduction gear 41. In the present embodiment, as shown in FIGS. 4, 5 and the like, the low-speed one-way clutch 51 and the high-speed one-way clutch 52 overlap each other perpendicularly to the axis of the crank shaft 7a. The present invention is not limited to this configuration.

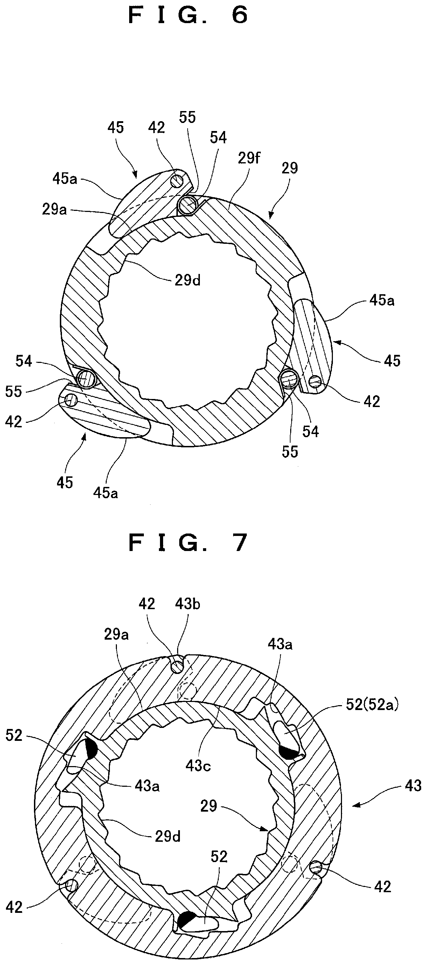

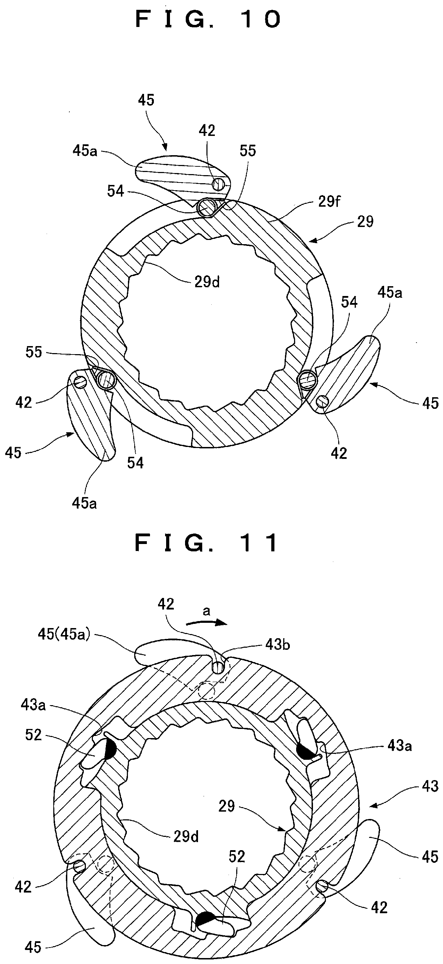

As shown in FIGS. 5, 6, 9, and 10, large-diameter circular portions 29f are circumferentially formed at two or more points (three points in the present embodiment) on the outer periphery of the left side of the medium-diameter cylindrical part 29a of the resultant-force transmission member 29, the circular portion 29f having a larger diameter than the medium-diameter cylindrical part 29a. A connecting pin 54 is inserted into each of the circular portions 29f so as to extend in parallel with the axis of the crank shaft 7a. Moreover, the transmission weight 45 formed integrally with a weight portion 45a with the distal end of the transmission weight 45 is attached via the connecting pin 54 so as to pivot in a so-called closed position shown in FIG. 6 and a so-called opened position shown in FIG. 10. Furthermore, a helical coil spring 55 is fit onto the connecting pin 54 so as to urge the transmission weight 45 in the closed position shown in FIG. 6.

Outside the location of the inserted connecting pin 54, the weight portion 45a has an interlocking pin 42 that is assembled by, for example, press fitting so as to extend in parallel with the axis of the crank shaft 7a. Moreover, a substantially annular engaging member 43 is assembled such that each of the interlocking pins 42 is fit into a groove 43b. The engaging member 43 is disposed circumferentially movable relative to the resultant-force transmission member 29 around the axis of the crank shaft 7a such that a circular surface 43c formed on the inner periphery of the engaging member 43 is slidable in contact with the circular surface 29f formed on the resultant-force transmission member 29. Furthermore, teeth 43a are formed partially on the inner periphery of the engaging member 43 so as to be removably engaged with the cams (ratchet claws) 52a on the left side of the high-speed one-way clutch 52.

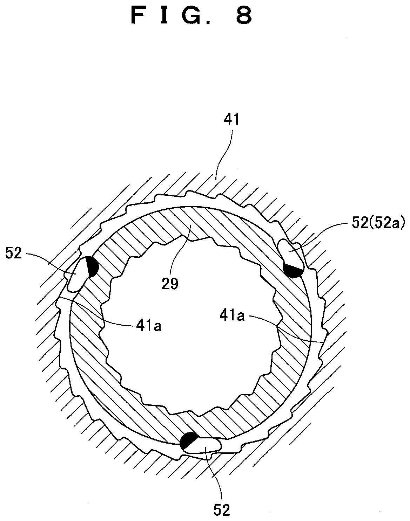

If the crank shaft 7a is rotated forward at a low speed via the pedals 8, as shown in FIGS. 5 to 7, the urging force of the helical coil spring 55 fits the inner periphery of the weight portion 45a of the transmission weight 45 in a closed position substantially along the outer surface of the medium-diameter cylindrical part 29a of the resultant-force transmission member 29. Accordingly, the engaging member 43 inclines (cannot raise) the cams (ratchet claws) 52a of the high-speed one-way clutch 52 via the interlocking pins 42. Thus, as shown in FIG. 8, the cams (ratchet claws) 52a of the high-speed one-way clutch 52 separate from the teeth 41a of the high-speed reduction gear 41, preventing transmission of the rotation of the high-speed reduction gear 41 to the resultant-force transmission member 29. This transmits only the rotary force of the low-speed reduction gear 36 to the resultant-force transmission member 29 via the low-speed one-way clutch 51, rotating the resultant-force transmission member 29 and the driving sprocket 13 at a low speed.

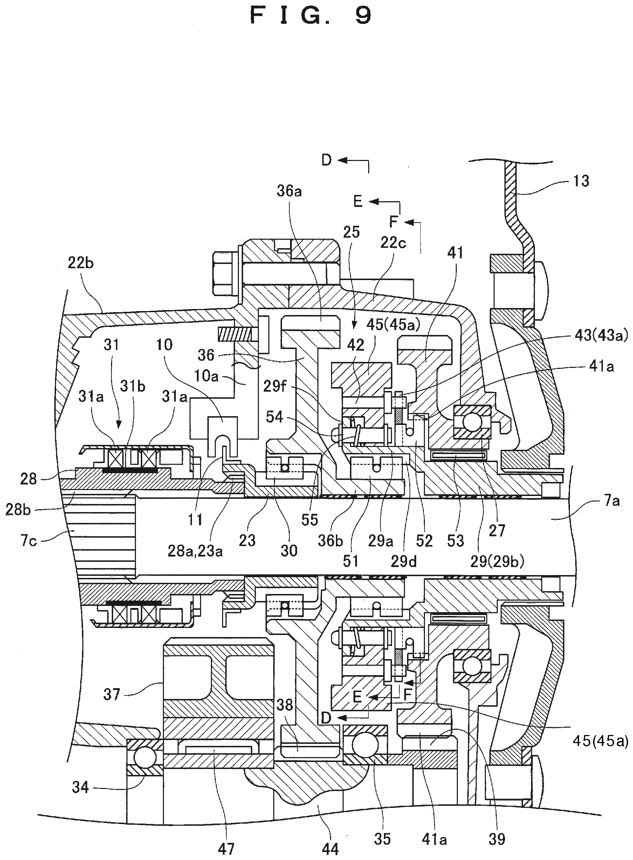

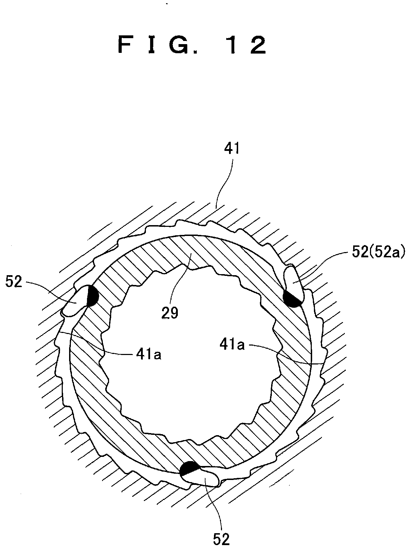

If the crank shaft 7a is rotated forward at a high speed via the pedals 8, as shown in FIGS. 9 to 11, the weight portion 45a of the transmission weight 45 has a larger centrifugal force than the urging force of the helical coil spring 55 and is to be an extended orientation (opened orientation) to the outside by the centrifugal force. Accordingly, the engaging member 43 moves in direction a (see FIG. 11) so as to raise the cams (ratchet claws) 52a of the high-speed one-way clutch 52. Thus, as shown in FIG. 12, the cams (ratchet claws) 52a of the high-speed one-way clutch 52 can be engaged with the teeth 41a of the high-speed reduction gear 41, transmitting the rotation of the high-speed reduction gear 41 to the resultant-force transmission member 29 through the high-speed one-way clutch 52. This rotates the resultant-force transmission member 29 and the driving sprocket 13 at a high speed. At this point, the low-speed one-way clutch 51 idles.

With this configuration, a high-speed rotation of the pedals 8 increases the rotation speeds of the crank shaft 7a and the transmission weight 45. This interlockingly changes (opens) the orientation of the transmission weight 45, leading to an automatic gear change from a low gear to a high gear. When the rotation of the pedals 8 changes from a high speed to a low speed, the orientation of the transmission weight 45 is interlockingly changed (closed), leading to an automatic gear change from the high gear to the low gear. Thus, the gears can be automatically changed, eliminating the need for a manual gear change.

At the beginning of traveling and the like, a large pedal force is frequently applied to the pedals 8 if the crank shaft 7a rotates via the pedals 8 at a low speed. Thus, the crank shaft 7a rotating at a low speed is always shifted to the low gear. This eliminates the need for components resistant to a high torque during high-speed rotations, for example, resultant-force transmission components such as the resultant-force transmission member 29, the driving sprocket 13, and the chain 15 that transmit a resultant force to the rear wheel 4, and the motor 21 (the motor 21 can output a high torque during high-speed rotations). Thus, relatively low manufacturing cost can be achieved without reducing reliability unlike in the case of components resistant to a high torque during high-speed rotations.

In other words, a manual gear change may apply a large pedal force in a high gear, for example, at the beginning of traveling and the like. This requires components resistant to a high torque during high-speed rotations, for example, resultant-force transmission components such as the resultant-force transmission member 29, the driving sprocket 13, and the chain 15 that transmit a resultant force to the rear wheel 4, and the motor 21 (the motor 21 can output a high torque during high-speed rotations), inevitably leading to high manufacturing cost. However, the drive unit 20 according to the embodiment of the present invention does not increase the manufacturing cost.

According to the present embodiment, the transmission weight 45 is rotated by a resultant force and thus can be satisfactorily rotated by a larger force than in a rotation only by a human driving force or an auxiliary driving force. This can change gears with relatively high stability, leading to high reliability.

Moreover, the drive unit 20 is a so-called single-shaft drive unit that outputs a resultant force from the driving sprocket 13 and thus the area of the drive unit 20 in side view (laterally projected area) can be advantageously smaller (compact) than that of a double-shaft drive unit, by devising the layout of the motor 21 and the transmission mechanism. Furthermore, the single-shaft drive unit advantageously eliminates the need for providing the tensioner device such as a tension sprocket or the like.

The drive unit 20 contains the transmission mechanism 21 with a so-called internal derailleur. This eliminates the need for a chain having small dimensions (small thickness) in the vehicle width direction if an external derailleur is provided in the single-shaft drive unit. Thus, the chain does not have an extremely short life expectancy causing frequent replacement of components or does not cause an insufficient auxiliary driving force. Moreover, a front derailleur is not necessary and does not cause any problems about the location of the front derailleur. Moreover, the human-power transmission member 28, the resultant-force transmission member 29, and the transmission mechanism 21 are disposed in the drive unit 20 so as to be protected from the outside, thereby improving reliability.

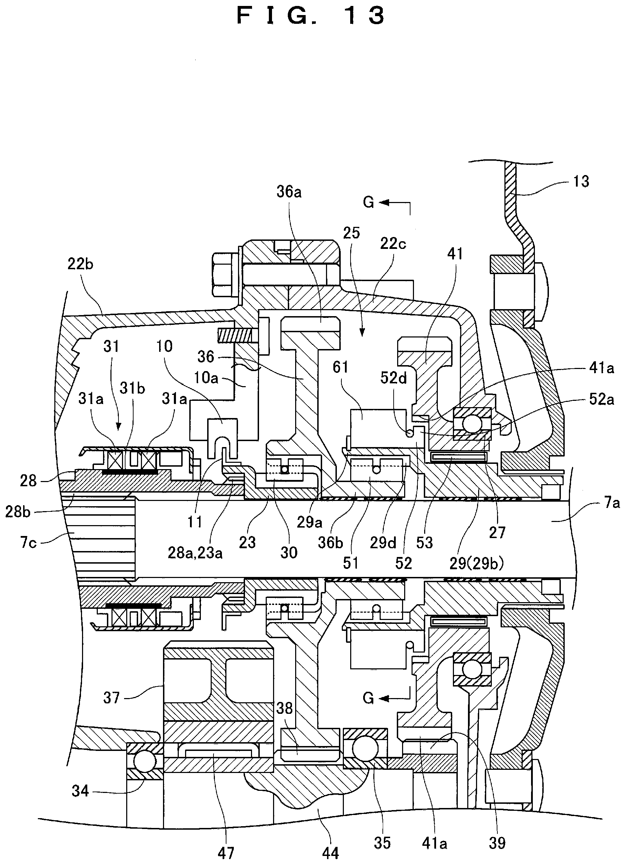

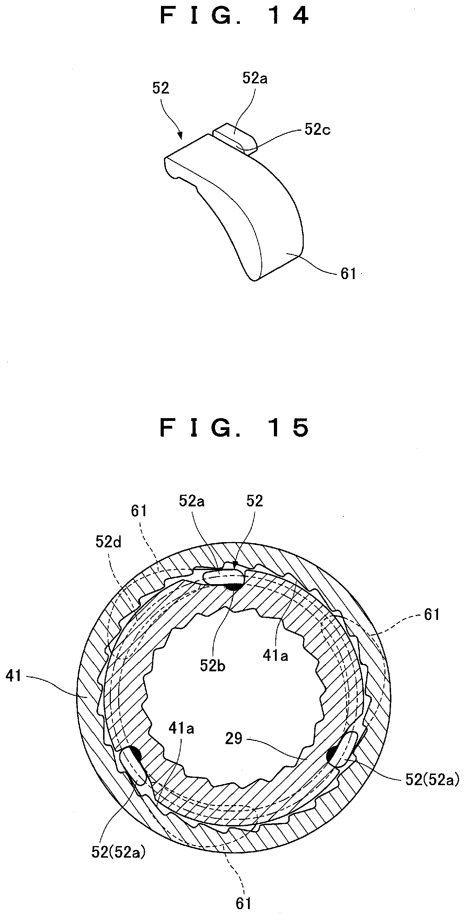

In the foregoing embodiment (first embodiment), the transmission weight 45 is pivotally mounted on the resultant-force transmission member 29 via the interlocking pin 42. The present invention is not limited to this configuration. FIGS. 13 to 17 show a transmission mechanism 25 for a drive unit 20 according to a second embodiment of the present invention. In the transmission mechanism 25 of the present embodiment, a transmission weight (weight portion) 61 is integrally formed on one side (left side in FIGS. 13 and 14) of a cam (ratchet claw) 52a of a high-speed one-way clutch 52 that is disposed between the locations of a resultant-force transmission member 29 and teeth 41a of a high-speed reduction gear 41.

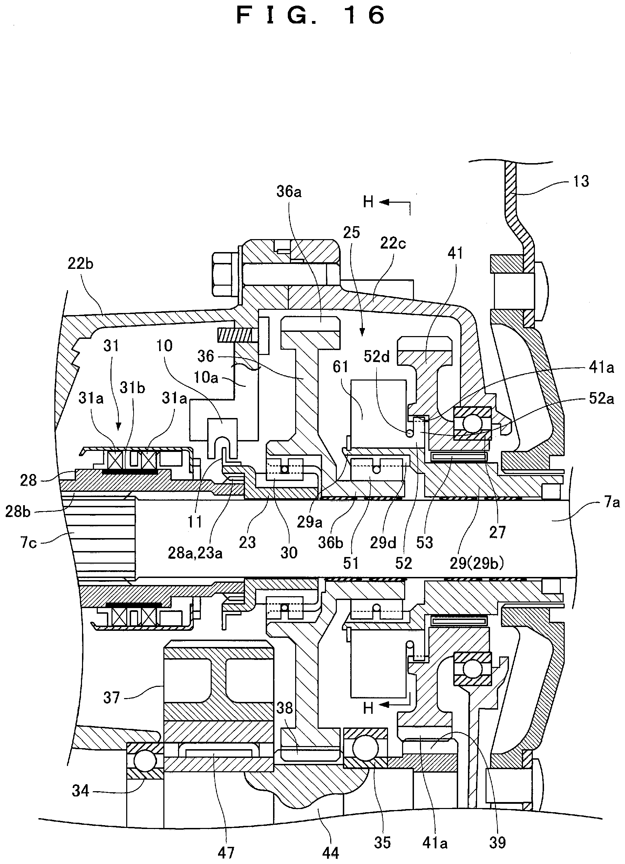

In the present embodiment, an annular coil spring is fit into a groove 52c laterally provided at an intermediate position of the high-speed one-way clutch 52. Thus, the cam (ratchet claw) 52a of the high-speed one-way clutch 52 is urged by the coil spring so as to incline (not to rise) to the inner periphery of the high-speed one-way clutch 52. Specifically, as schematically shown in FIGS. 14 and 16, an annular coil spring 52d fit into the groove 52c of the high-speed one-way clutch 52 presses a proximal portion 52b of the high-speed one-way clutch 52 inward such that the outer periphery of the proximal portion 52b in cross section is not placed in an upright position along the inner periphery of the coil spring when the cam (ratchet claw) 52a is inclined along the inner periphery. When the cam (ratchet claw) 52a is raised outward, the outer periphery of the proximal portion in cross section protrudes outward in an upright position from the inner periphery of the coil spring.

In this configuration, if a crank shaft 7a is rotated forward at a low speed via the pedals 8, as shown in FIGS. 13 and 15, the urging force of the coil spring 52d inclines (does not raise) the cams (ratchet claws) 52a of the high-speed one-way clutch 52. Thus, the cams (ratchet claws) 52a of the high-speed one-way clutch 52 separate from the teeth 41a of the high-speed reduction gear 41, preventing transmission of the rotation of the high-speed reduction gear 41 to the resultant-force transmission member 29. This transmits only the rotary force of a low-speed reduction gear 36 to the resultant-force transmission member 29 through a low-speed one-way clutch 51, rotating the resultant-force transmission member 29 and a driving sprocket 13 at a low speed.

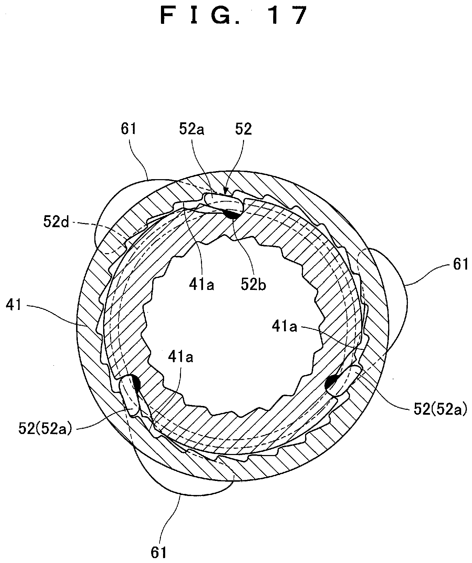

If the crank shaft 7a is rotated forward at a high speed via the pedals 8, a centrifugal force applied to the transmission weight (weight portion) 61 of the high-speed one-way clutch 52 is larger than the urging force of the coil spring 52d and the cams (ratchet claws) 52a of the high-speed one-way clutch 52 are extended and raised outward as shown in FIGS. 16 and 17. The cams (ratchet claws) 52a of the high-speed one-way clutch 52 can be engaged with the teeth 41a of the high-speed reduction gear 41, transmitting the rotation of the high-speed reduction gear 41 to the resultant-force transmission member 29 through the high-speed one-way clutch 52. This rotates the resultant-force transmission member 29 and the driving sprocket 13 at a high speed. At this point, the low-speed one-way clutch 51 idles.

With this configuration, a high-speed rotation of the pedals 8 increases the rotation speeds of the crank shaft 7a and the transmission weight (weight portion) 61. This interlockingly changes (opens) the orientation of the transmission weight (weight portion) 61, leading to an automatic gear change from a low gear to a high gear. When the rotations of the pedals 8 change from a high speed to a low speed, the orientation of the transmission weight (weight portion) 61 is interlockingly changed (closed), leading to an automatic gear change from the high gear to the low gear. Thus, the gears can be automatically changed, eliminating the need for a manual gear change. Moreover, the crank shaft 7a rotating at a low speed is always shifted to the low gear. This eliminates the need for components resistant to a high torque during high-speed rotations, for example, resultant-force transmission components such as the resultant-force transmission member 29, the driving sprocket 13, and the chain 15 that transmit a resultant force to the rear wheel 4, and the motor 21 (the motor 21 can output a high torque during high-speed rotations). Thus, the manufacturing cost can be reduced.

According to the present embodiment, the transmission weight 61 is rotated by a resultant force and thus can be satisfactorily rotated by a larger force than in a rotation only by a human driving force or an auxiliary driving force. This can change gears with relatively high stability, leading to high reliability.

In this configuration, the transmission weight (weight portion) 61 is integrally formed on a part of the high-speed one-way clutch 52. This eliminates the need for a connecting pin 54, an interlocking pin 42, an engaging member 43, and so on unlike in the embodiment shown in FIGS. 5 to 12, achieving quite a simple configuration. Thus, the manufacturing cost can be further reduced.

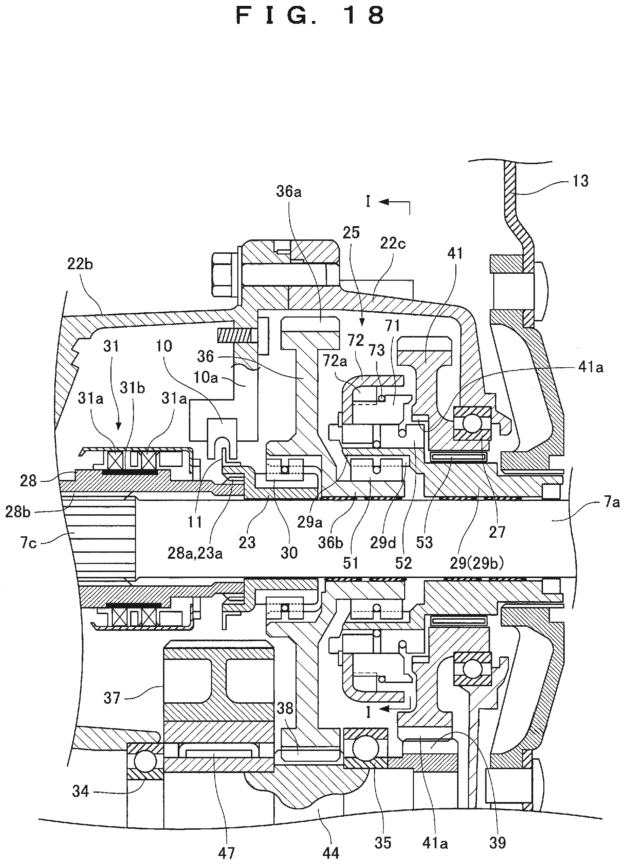

FIGS. 18 to 21 show a transmission mechanism 25 for a drive unit 20 according to a third embodiment of the present invention. In the transmission mechanism 25 of the present embodiment, a high-speed one-way clutch 52 is an ordinary clutch not provided with a weight portion. Moreover, an annular coil spring fit into a groove urges cams (ratchet claws) 52a of the high-speed one-way clutch 52 such that the cams 52a protrude (rise) to the outer peripheries of the high-speed one-way clutch 52.

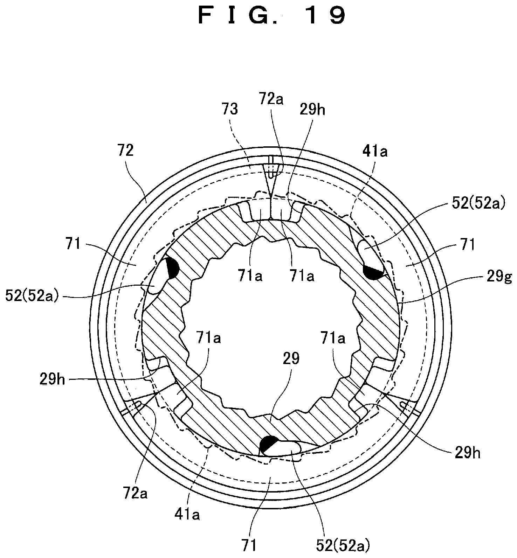

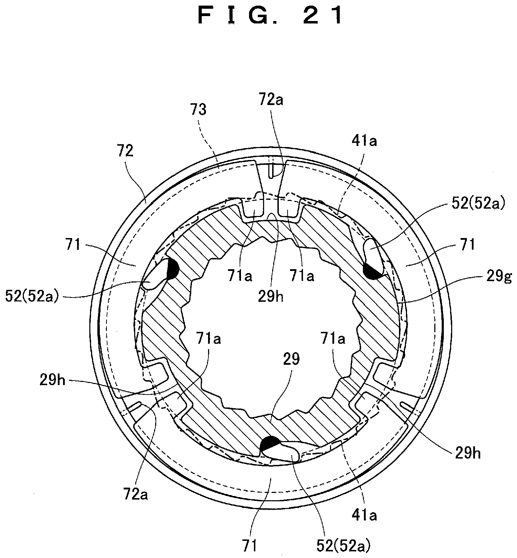

In the present embodiment, radially movable transmission weights 71 are disposed. As shown in FIGS. 18 to 21, the transmission weights 71 are circumferentially divided weights (divided into three in the present embodiment) that are substantially arc-shaped in side view. The transmission weight 71 is disposed so as to radially move (in a radial direction) between an outer cover 72, which is attached to the left end of a resultant-force transmission member 29 so as to cover the outer periphery of the transmission weight 71, and a large-diameter portion 29g (see FIGS. 19 and 21) of the resultant-force transmission member 29.

Moreover, convex portions 71a are formed on both inner ends of the transmission weight 71 so as to be fit into concave portions 29h formed on the resultant-force transmission member 29. This regulates a circumferential movement. Furthermore, an urging spring 73 composed of an annular coil spring is disposed so as to urge the outer surfaces of the three transmission weights 71 to the inside. The transmission weights 71 are urged inward by the urging spring 73. The outer cover 72 has ribs 72a formed to regulate a movement of the urging spring 73 to the left in FIG. 18.

As shown in FIGS. 18 to 21, the inner surfaces of the transmission weights 71 can be placed in contact with the left sides of cams (ratchet claws) 52a of high-speed one-way clutch 52. The right sides of the cams (ratchet claws) 52a of the high-speed one-way clutch 52 can be engaged with teeth 41a of a high-speed reduction gear 41.

In this configuration, if a crank shaft 7a is rotated forward at a low speed via pedals 8, as shown in FIGS. 18 and 19, the urging force of the urging spring 73 inclines the transmission weights 71 radially inward. The cams (ratchet claws) 52a of the high-speed one-way clutch 52 are pressed radially inward into an inclined position (not in an upright position) by the inner surfaces of the transmission weights 71. Thus, the cams (ratchet claws) 52a of the high-speed one-way clutch 52 separate from the teeth 41a of the high-speed reduction gear 41, preventing transmission of the rotation of the high-speed reduction gear 41 to the resultant-force transmission member 29. This transmits only the rotary force of a low-speed reduction gear 36 to the resultant-force transmission member 29 through a low-speed one-way clutch 51, rotating the resultant-force transmission member 29 and a driving sprocket 13 at a low speed.

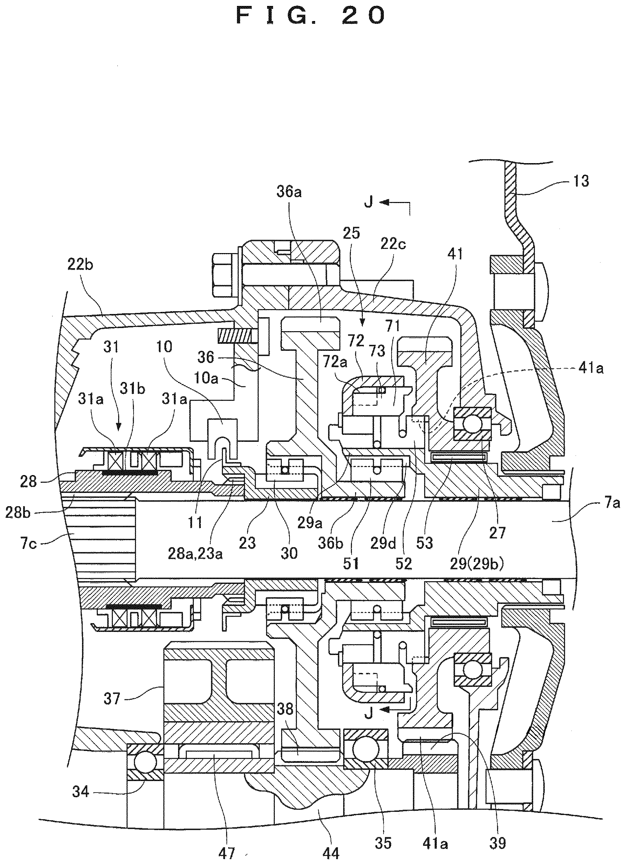

If the crank shaft 7a is rotated forward at a high speed via the pedals 8, a centrifugal force applied to the transmission weights 71 is larger than the urging force of the urging spring 73 and thus the transmission weights 71 are separated outward from the cams (ratchet claws) 52a of the high-speed one-way clutch 52 as shown in FIGS. 20 and 21. Hence, the cams (ratchet claws) 52a of the high-speed one-way clutch 52 can be engaged with the teeth 41a of the high-speed reduction gear 41, transmitting the rotation of the high-speed reduction gear 41 to the resultant-force transmission member 29 through the high-speed one-way clutch 52. This rotates the resultant-force transmission member 29 and the driving sprocket 13 at a high speed. At this point, the low-speed one-way clutch 51 idles.

Also in this configuration, a high-speed rotation of the pedals 8 increases the rotation speeds of the crank shaft 7a and the transmission weights 71, causing the transmission weights 71 to have a larger centrifugal force. Thus, the transmission weights 71 move radially outward and the cams (ratchet claws) 52a of the high-speed one-way clutch 52 can be engaged with the teeth 41a of the high-speed reduction gear 41, leading to an automatic gear change from a low gear to a high gear. When the rotation of the pedals 8 changes from a high speed to a low speed, the transmission weights 71 move radially inward and the high-speed one-way clutch 52 separate from the high-speed reduction gear 41, leading to an automatic gear change from the high gear to the low gear. Thus, the gears can be automatically changed, eliminating the need for a manual gear change. The crank shaft 7a rotating at a low speed is always shifted to a low gear. This eliminates the need for components resistant to a high torque during high-speed rotations, for example, resultant-force transmission components such as the resultant-force transmission member 29, the driving sprocket 13, and a chain 15 that transmit a resultant force to the rear wheel 4, and a motor 21 (the motor 21 can output a high torque during high-speed rotations). Thus, the manufacturing cost can be reduced.

According to the present embodiment, the transmission weights 71 are rotated by a resultant force and thus can be satisfactorily rotated by a larger force than in a rotation only by a human driving force or an auxiliary driving force. This can change gears with relatively high stability, leading to high reliability.

This configuration can automatically change gears with relative ease. Thus, relatively low manufacturing cost can be achieved.

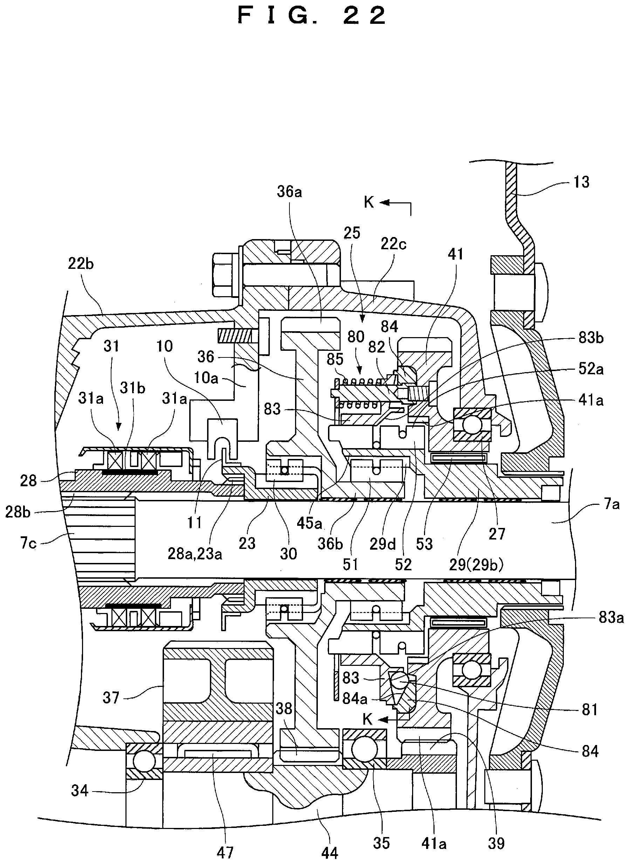

In the first to third embodiments, the transmission weights 45, 61, and 71 are all mounted on the resultant-force transmission member 29. The present invention is not limited to this configuration. FIGS. 22 to 24 show a transmission mechanism 25 for a drive unit 20 of an electric assisted bicycle according to a fourth embodiment of the present invention. In the transmission mechanism 25 of the present embodiment, a weight holding part 80 is attached to a high-speed reduction gear 41 via a support slide shaft 82, the weight holding part 80 serving as a high-speed rotation part that circumferentially holds multiple balls like a ball bearing. In this configuration, the balls act as transmission weights 81.

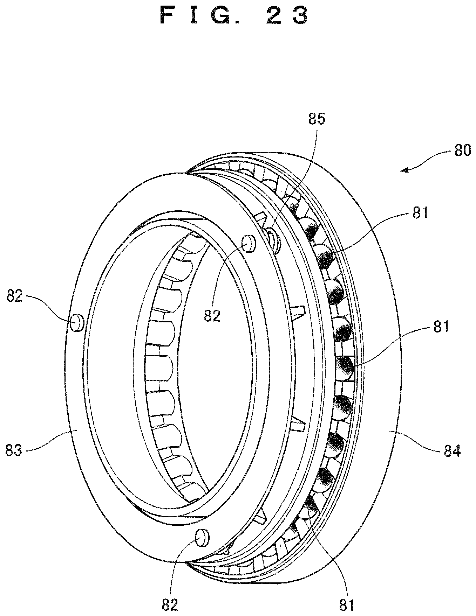

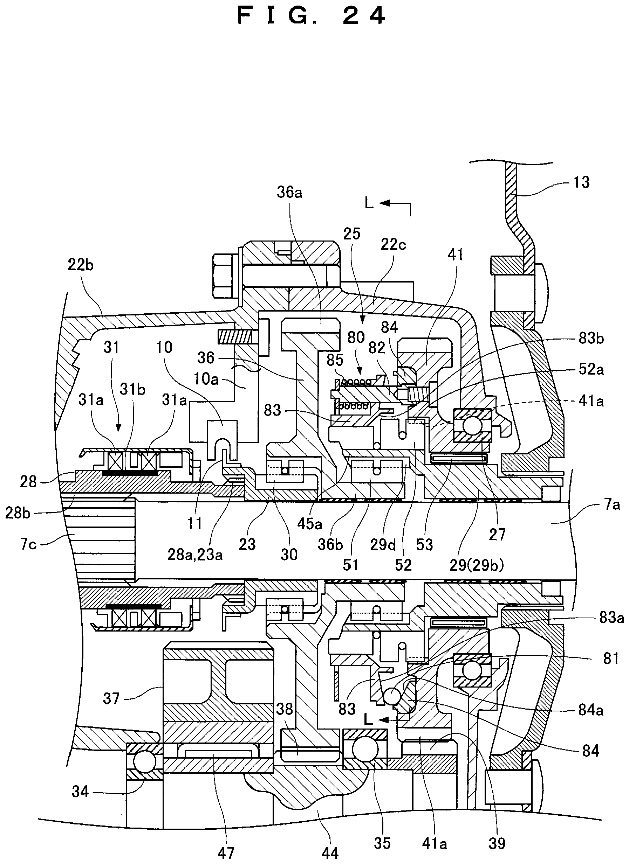

The configuration will be specifically described below. As shown in FIGS. 22 and 24, the support slide shaft 82 is attached so as to protrude to the left side from a point outside teeth 41a of the high-speed reduction gear 41. The weight holding part 80 is attached via the support slide shaft 82. As shown in, for example, FIGS. 22, 23 and the like, the weight holding part 80 holds the multiple transmission weights 81 composed of balls, the transmission weights 81 being held from both sides (laterally) between an inner member (moving member) 83 and an outer member 84. For example, in FIG. 22, the outer member 84 disposed on the right side is fixed to the left side of the high-speed reduction gear 41, whereas the inner member 83 disposed on the left side is supported via the support slide shaft 82 so as to move to the left side. Moreover, an urging spring 85 that urges the inner member (moving member) 83 to the right side is disposed on the left part of the support slide shaft 82.

As indicated in a lower part shown in FIGS. 22 and 24, the transmission weights 81 composed of balls are held by the inner member 83 and the outer member 84 with inclined surfaces 83a and 84a, the transmission weights 81 being held with dimensions decreasing to the outside. The inner member 83 has an inclined surface 83b for inclination near a high-speed one-way clutch 52. The inclined surface 83b comes into contact with the left sides of cams (ratchet claws) 52a of the high-speed one-way clutch 52 so as to incline the cams (ratchet claws) 52a.

In this configuration, if a crank shaft 7a is rotated forward at a low speed via pedals 8, a small centrifugal force is applied to the transmission weights 81. Thus, as shown in FIG. 22, the urging force of the urging spring 85 inclines the inner member 83 to the right side. The cams (ratchet claws) 52a of the high-speed one-way clutch 52 are pressed radially inward into an inclined position (not in an upright position) by the inclined surface 83b for inclination on the inner member 83. Thus, the cams (ratchet claws) 52a of the high-speed one-way clutch 52 separate from the teeth 41a of the high-speed reduction gear 41, preventing transmission of the rotation of the high-speed reduction gear 41 to the resultant-force transmission member 29. This transmits only the rotary force of a low-speed reduction gear 36 to the resultant-force transmission member 29 through a low-speed one-way clutch 51, rotating the resultant-force transmission member 29 and a driving sprocket 13 at a low speed.

A high-speed rotation of the crank shaft 7a in a forward direction via the pedals 8 increases a centrifugal force applied to the transmission weights 81 composed of balls. This increases a force for extending the inner member 83 to the left from the inclined surface 83a. Thus, as shown in FIG. 24, the inner member 83 serving as a moving member moves to the left against the urging force of the urging spring 85. This separates the inclined surface 83b for inclination on the inner member 83 to the left side of the cams (ratchet claws) 52a of the high-speed one-way clutch 52. Hence, the cams (ratchet claws) 52a of the high-speed one-way clutch 52 can be engaged with the teeth 41a of the high-speed reduction gear 41, transmitting the rotation of the high-speed reduction gear 41 to the resultant-force transmission member 29 through the high-speed one-way clutch 52. This rotates the resultant-force transmission member 29 and the driving sprocket 13 at a high speed. At this point, the low-speed one-way clutch 51 idles.

Also in this configuration, a high-speed rotation of the pedals 8 increases the rotation speeds of the crank shaft 7a and the transmission weights 81, causing the transmission weights 81 to have a larger centrifugal force. Thus, the transmission weights 81 move radially outward and the cams (ratchet claws) 52a of the high-speed one-way clutch 52 can be engaged with the teeth 41a of the high-speed reduction gear 41, leading to an automatic gear change from a low gear to a high gear. When the rotation of the pedals 8 changes from a high speed to a low speed, the transmission weights 81 move radially inward and the high-speed one-way clutch 52 separate from the high-speed reduction gear 41, leading to an automatic gear change from the high gear to the low gear. Thus, the gears can be automatically changed, eliminating the need for a manual gear change. The crank shaft 7a rotating at a low speed is always shifted to a low gear. This eliminates the need for components resistant to a high torque during high-speed rotations, for example, resultant-force transmission components such as the resultant-force transmission member 29, the driving sprocket 13, and a chain 15 that transmit a resultant force to a rear wheel 4, and a motor 21 (the motor 21 can output a high torque during high-speed rotations). Thus, the manufacturing cost can be reduced.

According to the present embodiment, the transmission weights 81 are rotated by a resultant force and thus can be satisfactorily rotated by a larger force than in a rotation only by a human driving force or an auxiliary driving force. This can change gears with relatively high stability, leading to high reliability.

In the transmission mechanism 25 according to the fourth embodiment, the weight holding part 80 serving as a high-speed rotation part is attached to the high-speed reduction gear 41 that is always rotated at a high speed. The transmission weights 81 are rotated at a high speed and thus receive a relatively large centrifugal force. This can change gears with relatively high stability, leading to high reliability.

As compared with the transmission weights 45, 61, and 71 attached to the resultant-force transmission member 29 according to the first to third embodiments, the pedals 8 are rotated at a low speed so as to rotate the high-speed reduction gear 41 faster than the resultant-force transmission member 29. This allows the transmission weight 81 to have a relatively small size, thereby reducing the size of the so-called single-shaft drive unit 20 including an internal derailleur.

According to the foregoing embodiments, the transmission weights 45, 61, 71, and 81 are rotated by a resultant force. The present invention is not limited to this configuration. The transmission weights may be rotated only by a human driving force or a motor driving force (auxiliary driving force).

In the foregoing embodiments, the chain 15 is used as an endless driving force transmission member and a force from the driving sprocket 13 is transmitted to the rear sprocket 14 through the chain 15. However, the present invention is not limited to this configuration. The endless driving force transmission member may be a toothed belt and a force from a driving gear corresponding to the driving sprocket may be transmitted to a rear gear through the toothed belt.

### Industrial Applicability

The present invention is applicable to various kinds of electric assisted bicycles capable of traveling with a combination of a human driving force generated by a pedal force from a pedal and an auxiliary driving force generated by a motor.

## Claims

1. An electric assisted bicycle comprising a drive unit with a motor, the electric assisted bicycle being capable of traveling with a combination of a human driving force generated by a pedal force from a pedal (8) and an auxiliary driving force generated by the motor (21),
wherein the drive unit (20) is disposed at an intermediate position between a front wheel (3) and a rear wheel (4),
the drive unit (20) includes a transmission mechanism that transmits a resultant force of the human driving force and the auxiliary driving force from the motor (21) while changing multiple gears (36 - 41),
**characterized in that**
the transmission mechanism (25) includes at least one transmission weight (45, 61, 71, 81) whose orientation is changed according to a centrifugal force during a rotation of the transmission weight, and
an increase in a rotation speed of a crank shaft (7a) interlockingly raises a rotation speed of the transmission weight and changes the orientation of the transmission weight so as to change from a low gear to a high gear.

2. The electric assisted bicycle according to claim 1, wherein the transmission weight (45, 61, 71, 81) is rotated by the resultant force.

3. The electric assisted bicycle according to one of claims 1 and 2, further comprising a human-power transmission member (28) and a resultant-force transmission member (29) on an outer periphery of the crank shaft (7a), the human-power transmission member (28) receiving the transmitted human driving force, the resultant-force transmission member (29) receiving the transmitted resultant force.

4. The electric assisted bicycle according to claim 3, wherein the human-power transmission member (28), the resultant-force transmission member (29), and the transmission mechanism (25) are disposed in the drive unit (20),
the electric assisted bicycle further comprises a driving force output wheel (13) coaxial with the crank shaft (7a) and an endless driving force transmission member (15) looped over the driving force output wheel (13), and
the resultant force transmitted to the resultant-force transmission member (29) through the transmission mechanism (25) is transmitted to the rear wheel (4) through the driving force output wheel (13) and the endless driving force transmission member (15).

5. The electric assisted bicycle according to one of claims 1 and 2, further comprising a human-power transmission member (28) that receives the transmitted human driving force, a resultant-force transmission member (29) where an output wheel (13) is assembled to output the resultant force from the drive unit (20), a low-speed reduction gear (36) that transmits the resultant force to the resultant-force transmission member (29) during a low-speed rotation, and a high-speed reduction gear (41) that transmits the resultant force to the resultant-force transmission member (29) during a high-speed rotation.

6. The electric assisted bicycle according to claim 5, further comprising a high-speed one-way clutch (52) disposed between the high-speed reduction gear (41) and the resultant-force transmission member (29) so as to transmit a rotary force of the high-speed reduction gear (41) to the resultant-force transmission member (29),
wherein the high-speed one-way clutch (52) is switched to a disengaged state and an engaged state according to the change of the orientation of the transmission weight (45, 61, 71, 81), the orientation being changed by the centrifugal force.

7. The electric assisted bicycle according to any one of claims 1 to 6, wherein the transmission weight (45) is disposed so as to pivot about a shaft rotating coaxially with the crank shaft (7a).

8. The electric assisted bicycle according to claim 7 in combination with any one of claims 3 to 6, wherein the transmission weight (45) is disposed so as to pivot about a connecting pin (54) connected to the resultant-force transmission member (29) that receives the transmitted resultant force.

9. The electric assisted bicycle according to claim 6, wherein the transmission weight (61) is provided on the highspeed one-way clutch (52).

10. The electric assisted bicycle according to any one of claims 1 to 6, wherein the transmission weight (71) is radially movable relative to an axis of the crank shaft (7a) and is disposed so as to rotate coaxially with the crank shaft (7a).

11. The electric assisted bicycle according to one of claims 5 and 6, wherein the transmission weight (81) is disposed on a high-speed rotation part (80) attached to the high-speed reduction gear (41).

12. The electric assisted bicycle according to claim 6, wherein the transmission weight (81) is disposed on a high-speed rotation part (80) attached to the high-speed reduction gear (41),
the high-speed rotation part (80) has a moving member (83) whose position is switched based on the centrifugal force of the transmission weight (81), and
the moving member (83) switches the high-speed one-way clutch (52) to the disengaged state and the engaged state.

13. The electric assisted bicycle according to any one of claims 3 to 6, 8, 9, 11 and 12, wherein the human-power transmission member (28) has a magnetostriction generation portion (31b) of a torque sensor (31) for detecting the human driving force.

14. The electric assisted bicycle according to any one of claims 3 to 6, 8, 9, 11 and 12, wherein one of the human-power transmission member (28) and a component (23) interlocking with the human-power transmission member (28) includes a rotation detector (11) that detects a rotation of the human-power transmission member (28).

15. The electric assisted bicycle according to claim 4, wherein the endless driving force transmission member (15) is a toothed belt.

## Patentansprüche

1. Fahrrad mit elektrischer Unterstützung, das eine Antriebs-Einheit mit einem Motor umfasst, wobei das Fahrrad mit elektrischer Unterstützung mit einer Kombination aus einer menschlichen Antriebskraft, die mittels einer Pedalkraft über ein Pedal (8) erzeugt wird, und einer Zusatz-Antriebskraft fahren kann, die von dem Motor (21) erzeugt wird,
wobei die Antriebs-Einheit (20) an einer Zwischenposition zwischen einem Vorderrad (3) und einem Hinterrad (4) angeordnet ist,
die Antriebs-Einheit (20) einen Getriebemechanismus enthält, der eine aus der menschlichen Antriebskraft und der Zusatz-Antriebskraft von dem Motor (21) resultierende Kraft überträgt und dabei mehrere Gänge (36-41) schaltet,
**dadurch gekennzeichnet, dass**
der Getriebemechanismus (25) wenigstens ein Getriebegewicht (45, 61, 71, 81) enthält, dessen Ausrichtung entsprechend einer Zentrifugalkraft während einer Drehung des Getriebegewichtes geändert wird, und
eine Zunahme einer Drehgeschwindigkeit einer Tretkurbelwelle (7a) formschlüssig eine Drehgeschwindigkeit des Getriebegewichtes erhöht und die Ausrichtung des Getriebegewichtes so ändert, dass von einem niedrigen Gang zu einem hohen Gang geschaltet wird.

2. Fahrrad mit elektrischer Unterstützung nach Anspruch 1, wobei das Getriebegewicht (45, 61, 71, 81) durch die resultierende Kraft gedreht wird.

3. Fahrrad mit elektrischer Unterstützung nach einem der Ansprüche 1 und 2, das des Weiteren ein Element (28) zur Übertragung menschlicher Kraft sowie ein Element (29) zur Übertragung resultierender Kraft an einem Außenumfang der Tretkurbelwelle (7a) umfasst, wobei das Element (28) zur Übertragung menschlicher Kraft die übertragene menschliche Antriebskraft empfängt und das Element (29) zur Übertragung resultierender Kraft die übertragene resultierende Kraft empfängt.

4. Fahrrad mit elektrischer Unterstützung nach Anspruch 3, wobei das Element (28) zur Übertragung menschlicher Kraft, das Element (29) zur Übertragung resultierender Kraft und der Getriebemechanismus (25) in der Antriebs-Einheit (20) angeordnet sind,
das Fahrrad mit elektrischer Unterstützung des Weiteren ein Antriebskraft-Ausgabe-Rad (13) koaxial mit der Tretkurbelwelle (7a) sowie ein endloses Antriebskraft-Übertragungselement (15) umfasst, das über das Antriebskraft-Ausgabe-Rad (13) läuft, und
die über den Getriebemechanismus (25) auf das Element (29) zur Übertragung resultierender Kraft übertragene resultierende Kraft über das Antriebskraft-Ausgabe-Rad (13) und das endlose Antriebskraft-Übertragungselement (15) auf das Hinterrad (4) übertragen wird.

5. Fahrrad mit elektrischer Unterstützung nach einem der Ansprüche 1 und 2, das des Weiteren ein Element (28) zur Übertragung menschlicher Kraft, das die übertragene menschliche Antriebskraft empfängt, ein Element (29) zur Übertragung resultierender Kraft, an dem ein Ausgabe-Rad (13) zum Ausgeben der resultierenden Kraft von der Antriebs-Einheit (20) montiert ist, ein Untersetzungs-Zahnrad (36) für niedrige Geschwindigkeit, das die resultierende Kraft während einer Drehung mit niedriger Geschwindigkeit zu dem Element (29) zur Übertragung resultierender Kraft überträgt, sowie ein Untersetzungs-Zahnrad (41) für hohe Geschwindigkeit umfasst, das die resultierende Kraft während einer Drehung mit hoher Geschwindigkeit zu dem Element (29) zur Übertragung resultierender Kraft überträgt.

6. Fahrrad mit elektrischer Unterstützung nach Anspruch 5, das des Weiteren eine Freilaufkupplung (52) für hohe Geschwindigkeit umfasst, die zwischen dem Untersetzungs-Zahnrad (41) für hohe Geschwindigkeit und dem Element (29) zur Übertragung resultierender Kraft angeordnet ist und eine Drehkraft des Untersetzungs-Zahnrades (41) für hohe Geschwindigkeit zu dem Element (29) zur Übertragung resultierender Kraft überträgt,
wobei die Freilaufkupplung (52) für hohe Geschwindigkeit entsprechend der Änderung der Ausrichtung des Getriebegewichtes (45, 61, 71, 81) in einen ausgerückten Zustand und einen eingerückten Zustand versetzt wird, und die Ausrichtung durch die Zentrifugalkraft geändert wird.

7. Fahrrad mit elektrischer Unterstützung nach einem der Ansprüche 1 bis 6, wobei das Getriebegewicht (45) so angeordnet ist, dass es um eine Welle herum geschwenkt wird, die sich koaxial mit der Tretkurbelwelle (7a) dreht.

8. Fahrrad mit elektrischer Unterstützung nach Anspruch 7 in Kombination mit einem der Ansprüche 3 bis 6, wobei das Getriebegewicht (45) so angeordnet ist, dass es um einen Verbindungsbolzen (54) herum geschwenkt wird, der mit dem Element (29) zur Übertragung resultierender Kraft verbunden ist, das die übertragene resultierende Kraft empfängt.

9. Fahrrad mit elektrischer Unterstützung nach Anspruch 6, wobei sich das Getriebegewicht (61) an der Freilaufkupplung (52) für hohe Geschwindigkeit befindet.

10. Fahrrad mit elektrischer Unterstützung nach einem der Ansprüche 1 bis 6, wobei das Getriebegewicht (71) radial relativ zu einer Achse der Tretkurbelwelle (7a) bewegt werden kann und so angeordnet ist, dass es sich koaxial mit der Tretkurbelwelle (7a) dreht.

11. Fahrrad mit elektrischer Unterstützung nach einem der Ansprüche 5 und 6, wobei das Getriebegewicht (81) an einem Dreh-Teil (80) für hohe Geschwindigkeit angeordnet ist, das an dem Untersetzungs-Zahnrad (41) für hohe Geschwindigkeit angebracht ist.

12. Fahrrad mit elektrischer Unterstützung nach Anspruch 6, wobei das Getriebegewicht (81) an einem Dreh-Teil (80) für hohe Geschwindigkeit angeordnet ist, das an dem Untersetzungs-Zahnrad (41) für hohe Geschwindigkeit angebracht ist,
das Dreh-Teil (80) für hohe Geschwindigkeit ein sich bewegendes Element (83) aufweist, dessen Position auf Basis der Zentrifugalkraft des Getriebegewichtes (81) geändert wird, und
das sich bewegende Element (83) die Freilaufkupplung (52) für hohe Geschwindigkeit in den ausgerückten Zustand und den eingerückten Zustand versetzt.

13. Fahrrad (1) mit elektrischer Unterstützung nach einem der Ansprüche 3 bis 6, 8, 9, 11 und 12, wobei das Element (28) zur Übertragung menschlicher Kraft einen Abschnitt (31b) zur Erzeugung von Magnetostriktion eines Drehmoment-Sensors (31) zum Erfassen der menschlichen Antriebskraft aufweist.

14. Fahrrad mit elektrischer Unterstützung nach einem der Ansprüche 3 bis 6, 8, 9, 11 und 12, wobei das Element (28) zur Übertragung menschlicher Kraft oder eine mit dem Element (28) zur Übertragung menschlicher Kraft in Eingriff befindliche Komponente (23) einen Drehungs-Detektor (11) enthält, der eine Drehung des Elementes (28) zur Übertragung menschlicher Kraft erfasst.

15. Fahrrad mit elektrischer Unterstützung nach Anspruch 4, wobei das endlose Antriebskraft-Übertragungselement (15) ein Zahnriemen ist.

## Revendications

1. Bicyclette à assistance électrique comprenant une unité d'entraînement avec un moteur, le bicyclette à assistance électrique étant capable de se déplacer avec une combinaison d'une force d'entraînement humaine générée par une force de pédale provenant d'une pédale (8) et d'une force d'entraînement auxiliaire générée par le moteur (21),
dans lequel l'unité d'entraînement (20) est disposée dans une position intermédiaire entre une roue avant (3) et une roue arrière (4),
l'unité d'entraînement (20) comprend un mécanisme de transmission qui transmet une force résultante de la force motrice humaine et de la force motrice auxiliaire provenant du moteur (21) tout en changeant plusieurs vitesses (36 - 41),
**caractérisée en ce que**
le mécanisme de transmission (25) comprend au moins un poids de transmission (45, 61, 71, 81) dont l'orientation est modifiée en fonction d'une force centrifuge pendant une rotation du poids de transmission, et
une augmentation de la vitesse de rotation d'un vilebrequin (7a) augmente de manière interverrouillable une vitesse de rotation du poids de transmission et modifie l'orientation du poids de transmission de manière à passer d'une vitesse inférieure à une vitesse élevée.

2. Bicyclette à assistance électrique selon la revendication 1, dans laquelle le poids de transmission (45, 61, 71, 81) est entraîné en rotation par la force résultante.

3. Bicyclette à assistance électrique selon l'une des revendications 1 et 2, comprenant en outre un organe de transmission de puissance humaine (28) et un organe de transmission de force résultante (29) sur un la périphérie extérieure du vilebrequin (7a), l'organe de transmission de puissance humaine (28) recevant la force motrice humaine transmise, l'organe de transmission de force résultante (29) recevant la force résultante transmise.

4. Bicyclette à assistance électrique selon la revendication 3, où l'organe de transmission de puissance humaine (28), l'organe de transmission de force résultante (29) et la transmission un mécanisme (25) sont disposés dans l'unité d'entraînement (20),
la bicyclette à assistance électrique comprend en outre une roue de sortie de force d'entraînement (13) coaxiale avec le vilebrequin (7a) et un organe de transmission de force d'entraînement sans fin (15) enroulé sur la roue de sortie de force d'entraînement (13), et
la force résultante transmise à l'organe de transmission de force résultante (29) à travers le mécanisme de transmission (25) est transmise à la roue arrière (4) par la roue de sortie de force d'entraînement (13) et l'organe de transmission de force motrice sans fin (15).

5. Bicyclette à assistance électrique selon l'une des revendications 1 et 2, comprenant en outre un organe de transmission de puissance humaine (28) qui reçoit la force motrice humaine transmise, un organe de transmission de force résultante (29) dans lequel une roue de sortie (13) est assemblée pour délivrer la force résultante de l'unité d'entraînement (20), un réducteur à faible vitesse (36) qui transmet la force résultante sur l'organe de transmission de force résultante (29) pendant une rotation à faible vitesse, et un réducteur à grande vitesse (41) qui transmet la force résultante à l'organe de transmission de force résultante (29) lors d'une rotation à grande vitesse.

6. Bicyclette à assistance électrique selon la revendication 5, comprenant en outre un embrayage unidirectionnel à grande vitesse (52) disposé entre le réducteur à grande vitesse (41) et l'organe de transmission de force résultante (29) de manière à transmettre une force de rotation du réducteur à grande vitesse (41) à l'organe de transmission de force résultante (29),
dans lequel l'embrayage unidirectionnel à grande vitesse (52) est commuté dans un état désengagé et un état engagé en fonction du changement d'orientation du poids de transmission (45, 61, 71, 81), l'orientation étant modifiée par la force centrifuge.

7. Bicyclette à assistance électrique selon l'une des revendications 1 à 6, dans lequel le poids de transmission (45) est disposé de manière à pivoter autour d'un arbre tournant de manière coaxiale avec le vilebrequin (7a).

8. Bicyclette à assistance électrique selon la revendication 7 en combinaison avec l'une quelconque des revendications 3 à 6, dans lequel le poids de transmission (45) est disposé de manière à pivoter autour d'une broche de connexion (54) connectée à l'organe de transmission de force résultante (29) qui reçoit la force résultante transmise.

9. Bicyclette à assistance électrique selon la revendication 6, dans lequel le poids de transmission (61) est prévu sur l'embrayage unidirectionnel à grande vitesse (52).

10. Bicyclette à assistance électrique selon l'une des revendications 1 à 6, dans lequel le poids de transmission (45) est mobile radialement par rapport à un axe du vilebrequin (7a) et est disposé de manière à tourner de manière coaxiale avec le vilebrequin (7a).

11. Bicyclette à assistance électrique selon l'une des revendications 5 et 6, dans lequel le poids de transmission (81) est disposé sur une pièce de rotation à grande vitesse (80) fixée au réducteur à grande vitesse (41).

12. Bicyclette à assistance électrique selon la revendication 6, dans lequel le poids de transmission (81) est disposé sur une pièce de rotation à grande vitesse (80) fixée au réducteur à grande vitesse (41),
la pièce de rotation à grande vitesse (80) comporte un organe mobile (83) dont la position est commutée en fonction de la force centrifuge du poids de transmission (81), et
l'organe mobile (83) commute l'embrayage unidirectionnel à grande vitesse (52) vers l'état désengagé et vers l'état engagé.

13. Bicyclette à assistance électrique selon l'une des revendications 3 à 6, 8, 9, 11 et 12, dans lequel l'organe de transmission de puissance humaine (28) a une pièce de génération de magnétostriction (31b) d'un capteur de couple (31) pour détecter la force motrice humaine.

14. Bicyclette à assistance électrique selon l'une des revendications 3 à 6, 8, 9, 11 et 12, dans lequel l'un des organes de transmission à puissance humaine (28) et un composant (23) s'enclenchant dans l'organe de transmission (28) à puissance humaine comprend un détecteur de rotation (11) qui détecte rotation de l'organe de transmission de force humaine (28).

15. Bicyclette à assistance électrique selon la revendication 4, dans laquelle l'organe de transmission de force motrice sans fin (15) est une courroie crantée.
